Europäisches Patentamt

European Patent Office

Office européen des brevets

(11) Publication number: **0 324 643**
**A1**

(12) # EUROPEAN PATENT APPLICATION

(21) Application number: **89300314.5**

(51) Int. Cl.⁴: **F 16 L 3/16**

(22) Date of filing: **13.01.89**

(30) Priority: **13.01.88 GB 8800714**

(43) Date of publication of application:
**19.07.89 Bulletin 89/29**

(84) Designated Contracting States: **DE FR GB NL**

(71) Applicant: **INDUSTRIAL ACOUSTICS COMPANY LTD.**
**Walton House Central Trading Estate**
**Staines Middlesex TW18 4XB (GB)**

(72) Inventor: **Woodfield, David John**
**22 Conifer Close Church Crookham**
**Aldershot Hants. GU13 OLS (GB)**

(74) Representative: **Orchard, Oliver John**
**JOHN ORCHARD & CO. Staple Inn Buildings North High**
**Holborn**
**London WC1V 7PZ (GB)**

(54) **Duct mounting.**

(57) An arrangement for use in the mounting of ductwork (1)(4), for example silencers and air intakes, includes struts and stays (9)(15) which take the weight of and support the ductwork (1)(4) and steadying means for holding the ductwork in position.

Fig.1.

EP 0 324 643 A1

**Description**

<div style="text-align: center">DUCT MOUNTING</div>

This invention relates to arrangements for use in the mounting of ductwork, silencers and like equipment. In mounting such equipment, which may for example be exhaust or air intake ducts for engines on board ships, it is one requirement that the weight of the mounting arrangement be kept as low as possible, while ensuring that the mounting arrangement provides a secure fixture between the duct and the ship. Mountings for ducts on board ship must also be able to withstand the shocks and vibrations to which they are likely to be subjected in use. It is also an advantage that the mounting arrangement should minimise the transfer of heat.

The mounting arrangements which are to be described below are designed to have a weight which is low compared with previously used arrangements and which are secure.

Embodiments illustrating features of the present invention will now be described, by way of example, with reference to the accompanying drawings in which:-

Figs. 1 and 2 are diagrammatic side views, taken at right angles to one another, of an exhaust duct extending above a ship's deck,

Figs. 3 and 4 are diagrammatic side views, taken at right angles to one another, of an air intake duct which is slung beneath a ship's desk,

Figs. 5, 6 and 7 are sections on the lines D-D; E-E; and F-F of Fig. 1, and

Figs. 8 and 9 are side views taken at right angles to each other and Fig. 10 is a plan view from beneath of a part of a trunnion mounting arrangement.

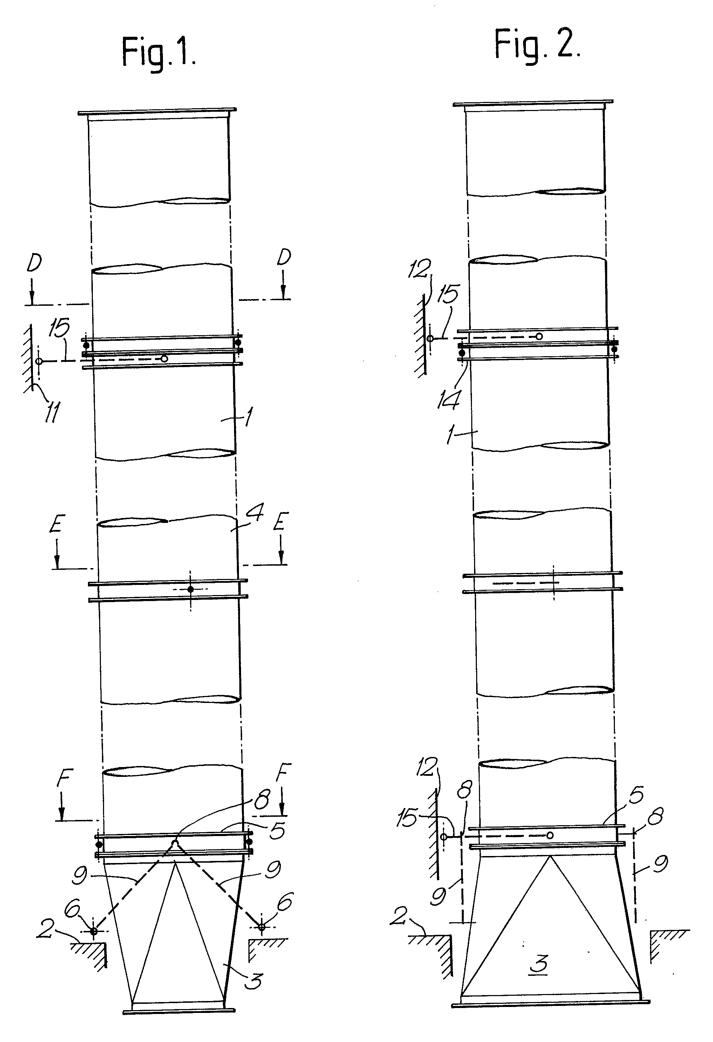

Referring to Figs. 1, 2, 5, 6 and 7, there is shown a vertically mounted exhaust duct 1 which is arranged to carry exhaust gases from an engine below the deck 2 of a ship to a height above the deck 2 at which the exhaust gases will be dispersed.

The duct 1 has a rectangular cross-section at its lower end 3 which passes through the deck 2. Over the major part 4 of its length, the duct I has a circular cross-section. At the lower end of the part 4 there is a support collar 5 which extends around the duct 1.

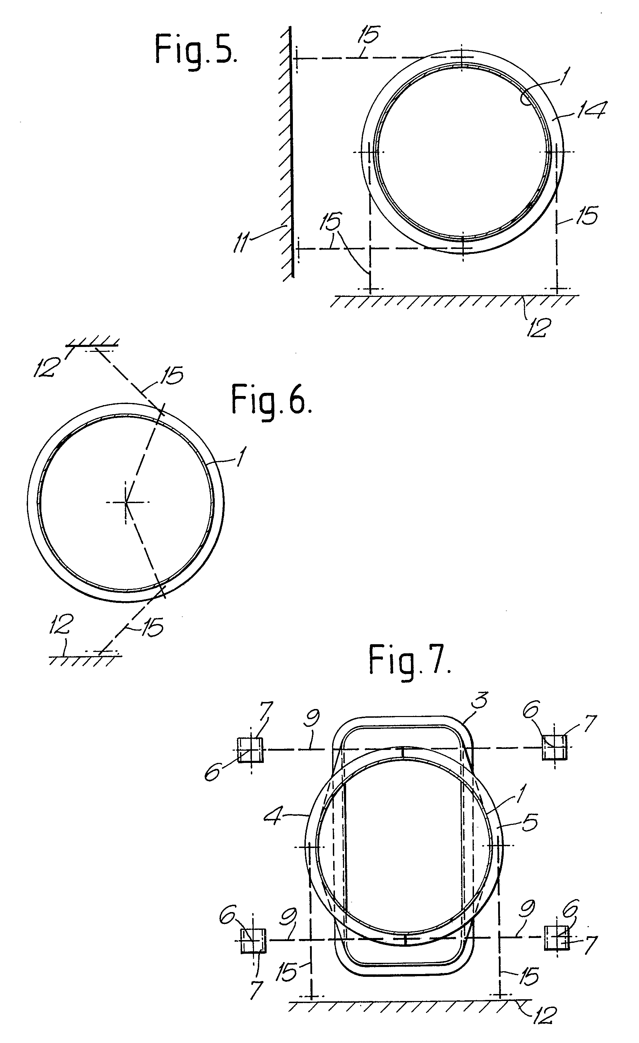

Between each of four pivot points 6 on respective mounting plates 7 on the deck 2 and pivot points 8 associated with the collar 5, there are respective struts 9, which are indicated diagrammatically by broken lines. Also arranged between vertically extending bulkheads 11 and 12 on the ship and pivot points 13 on collars 5 and 14 are lateral arms or stays 15 which are also indicated diagrammatically. It will be noted that the arms or stays 15 shown in Fig. 6 are at a different angle to the duct 1 from the others.

The struts 9 provide the main support member for the weight of the duct 1 and the stays 15 act to steady the duct 1.

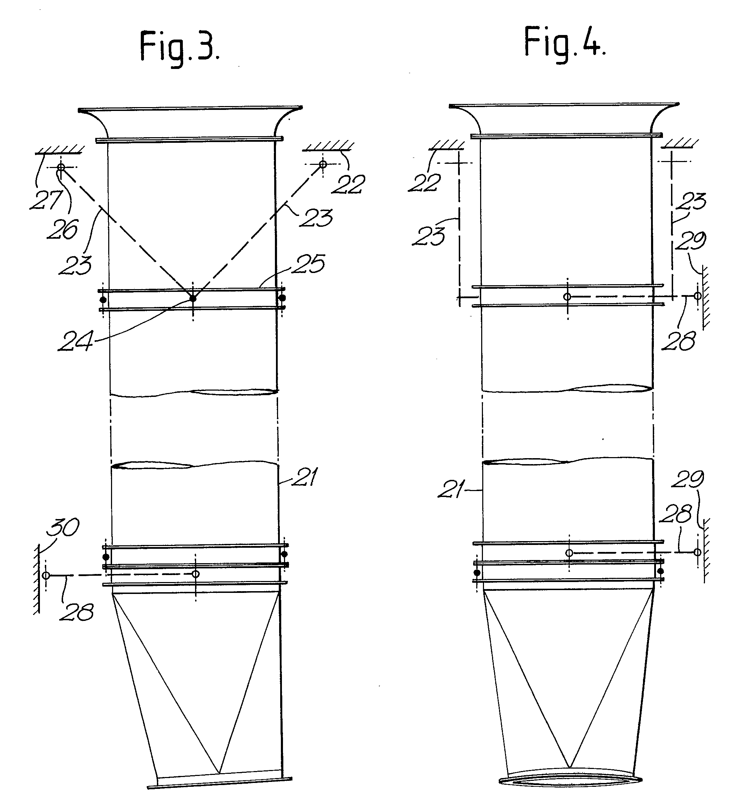

Referring to Figs. 3 and 4, there is shown a duct 21 which provides an air intake for an engine on board a ship. The duct 21 is supported beneath the deck 22 of a ship by means of stays 23 which are indicated by broken lines. The stays 23 extend between pivot points 24 on support collars 25 and pivotal suspension points 26 on respective mounting plates attached to the underside 27 of the deck 22. It will be understood that the various parts are illustrated diagrammatically in order to make it more easy to understand the arrangement being described. As in the arrangement described with reference to Figs. 1 and 2, there are also stays 28 which extend from bulkheads 29 and 30 in order to steady the duct 21. The main support members for the duct 21 are the stays 23 on which the duct 21 is suspended.

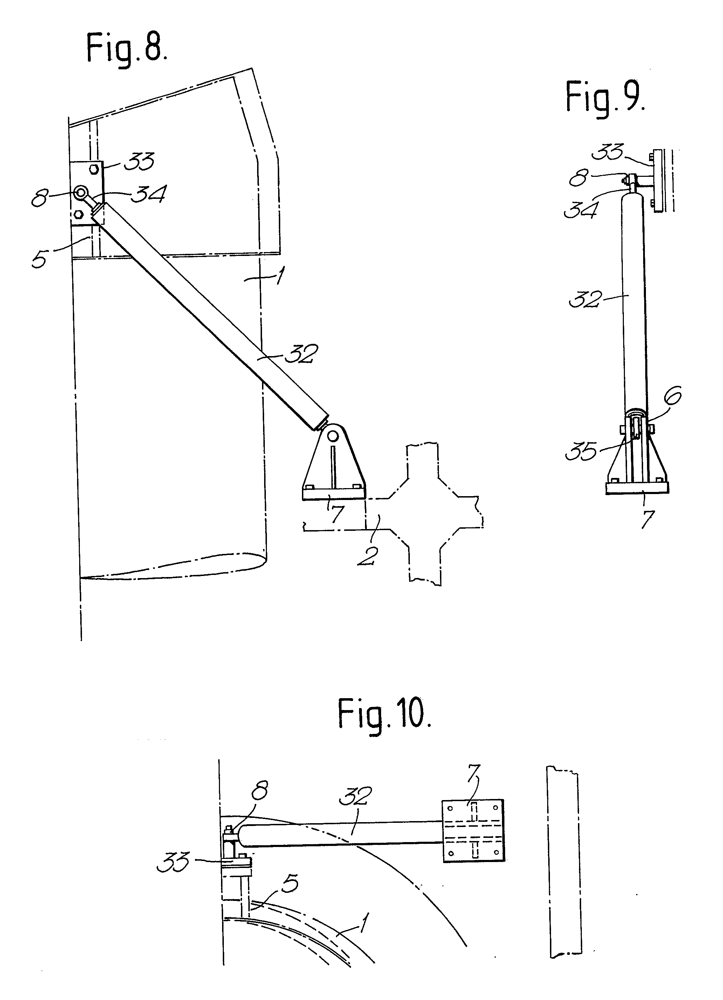

Referring to Figs. 8, 9 and 10, there is illustrated a practical form of a strut 9 for supporting the duct in the way shown in Figs. 1 and 2. In the arrangement shown in Figs. 1 and 2 the struts 9 are arranged in pairs and the views shown in Figs. 8, 9 and 10 are of one of the struts of a pair which is in the form of a trunnion 32.

The trunnion 32 extends between a pivot point 6 on a mounting plate 7 on the deck 2 and one of a pair of pivot points 8 on a mounting plate 33 which is bolted to the collar 5 surrounding the duct 1.

The trunnion arm 32 and its associated assembly is able to withstand both tensile and compressive loads while minimising the transfer of heat from the duct 1 to the structure of the ship. The minimising of heat transfer may be assisted by the provision of vanes which enable heat to be lost be convection and radiation from the trunnion assembly.

The trunnion arm 32 terminates in threaded eye bolts 34 and 35 which may be coupled to the body of the arm 32 via spring elements within the arm. The spring elements may be tensile or compressive members, so arranged that they reduce the possibility of shock, noise or vibration from being transmitted via the trunnion.

The eye bolts 34 and 35 may be threaded in opposite directions enabling the length of the strut to be adjusted easily by rotating the arm 32.

It will be appreciated that suitably designed trunnion arms may be used as supporting members to provide the stays 23, as well as the struts 9.

The trunnion arm 32 need not be a hollow cylinder. It could be a solid arm of fixed length. Furthermore, the couplings at the ends, instead of being provided by eyebolts on the trunnions cooperating with pins on the mounting plates could comprise pins on the trunnions cooperating with female members on the mounting plates. Rod end bearings may be used as an alternative and the mounting plates may be spaced from the ship by a cushioning member.

As an alternative or in addition to the "A" support or "V" suspension systems described above, a trunnion arm may be used horizontally either alone or with others to control horizontal or rotational forces reacting about all three axes.

The use of a three point attachment system, as in the "A" and "V" frames described above results in the creation of a structure having a basically fixed point from which longitudinal expansion takes place and allowance for this expansion may have to be taken into account in the design of the structure. It will be understood that the need for the expansion of all of the components in various directions may have to be considered and allowance made in each case.

It will be appreciated that in the particular embodiments that have been described by way of example, the "A" or "V" frame structures provide the support for the vertical loads and react to the lateral loads in one horizontal plane, the pairs of lateral arms reacting to the loads in at least a third orthogonal plane. However, the struts or stays could be arranged in other con figurations than those described. For example, a series of separate struts or stays may be arranged to extend from the duct to the supporting member around the duct. As an alternative to the trunnion arm described, it is possible to employ a comparatively flexible member, for example, a chain or a steel cable in tension, as a stay. Such a member may easily be provided with a coupling between two parts of its length in order to reduce the transmission of heat along its length.

The lateral or steady arms may be above and/or below the main support arrangement and will usually be arranged in pairs to restrain the duct against rotation. It may however be sufficient in certain situations to employ one pair of arms at right angles to one another.

It will also be understood that, although the invention has been described with reference to an installation on board a ship, it is possible for the installation to be on land and for the invention to be used with other ducting arrangements than those for engines. It is also possible for a duct which is arranged at an angle other than vertical, for example at the horizontal, or oblique angle, to be supported using a strut arrangement, similar to those described above.

It is also possible for a combination of a strut and a stay arrangement to be employed in supporting a duct, and that other members than ducts may be supported by such stay or strut arrangements.

It will be understood that particular embodiments have been described, by way of example only, and that other variations and modifications may be made within the scope of the invention claimed.

## Claims

1. An arrangement for use in the mounting of ductwork, for example silencers and air intakes, which includes stays or struts for supporting the ductwork.

2. An arrangement as claimed in claim 1 in which the stays or struts are arranged in pairs on opposite sides of the ductwork.

3. An arrangement as claimed in either claim 1 or claim 2 in which the stays or struts incorporate resilient or spring elements arranged to minimise the transmission of shock or vibrations between the ductwork and a mounting.

4. An arrangement as claimed in any one of the preceding claims in which the stays or struts are pivotally connected to the ductwork and the mounting respectively.

5. An arrangement as claimed in any one of the preceding claims including means to adjust the length of a stay or strut.

# Fig.1.

# Fig. 2.

# Fig.3.

# Fig.4.

EP 0 324 643 A1

Fig.5.

Fig.6.

Fig.7.

# Fig.8.

# Fig.9.

# Fig.10.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 045 391 (GÖRGENS) <br> * Figures; abstract * <br> --- | 1,2,4 | F 16 L 3/16 |
| A | US-A-4 182 504 (BERNHARD) <br> * Figure 1; column 3, lines 30-43 * <br> --- | 4,5 | |
| A | US-A-2 160 808 (BRADLEY) <br> * Figures 2,5; claims * <br> ----- | 3,4 | |

|  |  |
|---|---|
|  | TECHNICAL FIELDS SEARCHED (Int. Cl.4) |
|  | F 16 L |

The present search report has been drawn up for all claims

| Place of search | Date of completion of the search | Examiner |
|---|---|---|
| THE HAGUE | 06-04-1989 | NARMINIO A. |